# EUROPEAN PATENT APPLICATION

(11) **EP 4 589 440 A1**
(43) Date of publication of application: **23.07.2025**
(21) Application number: 24221883.2
(22) Date of filing: 19.12.2024
(51) Int. Cl.: G06F 11/30, G06F 11/07, G06F 11/34, G06N 3/045

(54) **LARGE LANGUAGE MODELS FOR EFFICIENT ANOMALY DETECTION IN LOG FILES OF INDUSTRIAL MACHINES**

(30) Priority: 18.01.2024 US 202418416704
(71) Applicant: Nano Dimension Technologies, Ltd., Ness Ziona 7403635 (IL)
(72) Inventor: LEVY, Ben, 5230007 7 Ba'al Shem Tov, Ramat Gan (IL); RUBIN, Eri, 9083500 1 Ma'ale Ha'hamisha, Kibbutz Ma'ale Ha'hamisha (IL); DAVID, Eli, 6958313 4 Schnitzer Shmuel Street, Apt. 17, Tel Aviv (IL); IZMAILOV, Marina, 7630021 4/16 Eliezer Ben Yehuda, Rehovot (IL); HURI, Katia, 5324108 8 Anzo Sireni, Apartment 7 Givatayim (IL)
(74) Representative: Pearl Cohen Zedek Latzer Baratz UK LLP

(57) **Abstract**

Abnormal behavior detection for industrial machines component(s) using large language models based on sequence(s) of log file messages recorded by logger(s) at initial time(s). The log file message sequence may be transformed into an anomaly severity sequence comprising log tokens encoding, times, and/or associated anomaly severity levels. The anomaly severity sequence may be input into the large language model. The large language model may output an anomaly severity histogram predicting M probabilities that the logger(s) will record log file messages encoded by log keys associated with M respective anomaly severity levels at the subsequent time(s). Abnormal behavior may be predicted based on the M probability patterns of the anomaly severity histogram, in the one or more components of the industrial machine logged by the one or more loggers at the one or more subsequent times. A control command may trigger automatically altering the component(s) operation to prevent the abnormal behavior.

## Description

### Field of the Invention

Embodiments of the invention are related to the field of detecting anomalous behavior of industrial machines by analyzing their log files. In particular, embodiments of the invention are related to using machine learning to automate log file analysis of industrial machines.

### Background of the Invention

Industrial machines produce log files, for example, timestamped data records or "tokens" of various states of their various components. Each token may detail information, such as, errors, temperature changes, pressure changes, processor functions, etc. For example, a three-dimensional (3D) printer may have log files indicating color(s) extracted from an ink cartridge, viscosity, temperature and humidity of the ink, electric or dielectric pixel patterns for printing, a signal when printing is performed, etc.

Log files are used to troubleshoot a problem when the industrial machine has an error, malfunctions, underperforms or fails. Since log files are often the only resource to recover and troubleshoot errors after a failure, log files are generally designed to be overinclusive and highly specific to anticipate and record all states of all components of industrial machines. As such, industrial machines tend to generate log files having massive data sizes (e.g., terabytes of data) and token types (e.g., thousands of different tokens). These log files are often unordered, unlabeled, and unstructured. In some cases, log files are not timestamped. Further, the mapping between components and log files may be one-to-one, one-to-many, many-to-one or many-to-many, complicating the interrelationship between components and log file tokens. The result are log files of massive size of mostly irrelevant data that can take human operators days of analysis to sort through to determine the cause of a machine error.

To solve this problem, machine learning solutions were developed to automatically analyze log files for root causes of industrial machine errors. Training these machine learning models, however, uses supervised learning that requires log file tokens to be labeled as associated with normal or abnormal functioning components or machines. Most log files, however, are unlabeled and it is cumbersome, if not impossible, to label these massive data sources for supervised training. Accordingly, training relies on the scarce resource of labeled log files which limits training accuracy. Further, the cause of machine errors are often unknown, or emerge from unknown combinations of multi-component states, and so, cannot be labeled.

Additionally, high token variety and specificity (e.g., hundreds or thousands of different types of tokens) makes it difficult to predict the next log token at a future time with sufficient and stable accuracy. High token variety also causes the large language model to explode in size, for example, growing by a power of the number of different possible tokens, thereby consuming massive memory and processor resources for the model's training and prediction. High token variety also limits the future prediction time because with such specificity the accuracy of the model's prediction quickly degrades as time increases. For example, accurate predictions (e.g., with at least 70% threshold accuracy) may only be reliably achieved in small timescales (e.g., within 1-2 seconds in the future). Such myopic prediction often make it impractical or impossible to act or respond to take corrective or preventative action in time to prevent predicted anomalies before they occur (e.g., after turning up a device's temperature, it may take more time for a printing substrate to heat than is needed to avoid printer error or failure).

Accordingly, there is a need in the art for efficient and accurate machine learning models for analyzing unstructured log files to predict root causes of industrial machine errors, e.g., on larger timescales, without human intervention.

### Summary of the Invention

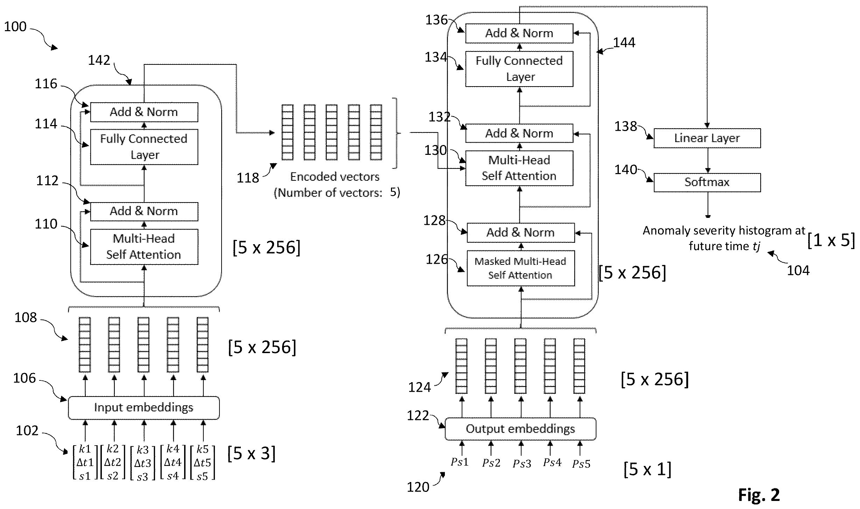

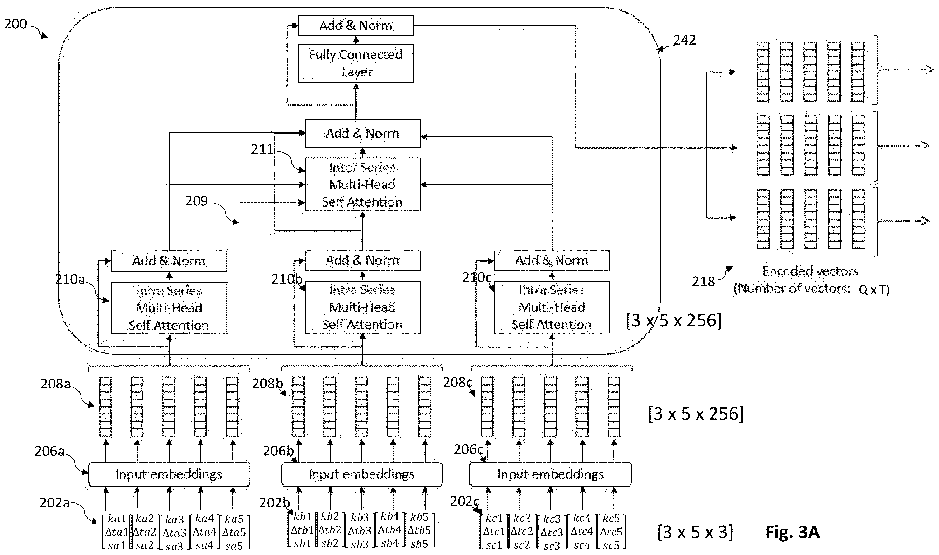

Embodiments of the invention may transform industrial machine log file messages indicating specific logged device behavior at a current time *ti* to predict a severity histogram that estimates multiple probabilities of anomalies of multiple respective severity levels occurring at a future time *tj*. Log file tokens are typically relatively highly specific (e.g., N = thousands of different log tokens) represented in a relatively high N-dimensional vector space compared to a severity histogram that characterizes relatively general anomaly severity levels (e.g., M = 5-10) represented in a relatively small M-dimensional vector space (e.g., M<<N). Reducing the dimension of the output space from N to M, reduces the dimensions of internal LLM data structures (e.g., by tens or thousands as discussed in reference to the transformer(s) of Figs. **2****, 3A-3B).**

Compared to next token prediction that model an N-dimensional vector space to predict probabilities for all N possible next log tokens, large language models according to embodiments of the invention provide a significantly reduced M-dimensional vector space to predict an M-dimensional anomaly severity histogram of M possible log severity levels. Modeling the M-dimensional anomaly severity histogram alters the structure of the large language model to a more compact and efficient machine learning engine that uses reduced size data structures, reduced memory, reduced computations, and faster processing speeds, compared to next token prediction (see e.g., the compact transformer(s) of Figs. **2****, 3A-3B).**

Reducing the dimension of the modeled vector space further improves prediction accuracy and stability at larger timescales into the future. Extending the predictive timescale of anomaly detection allows more time to prevent or correct errors before they occur, thus benefitting the operation of the industrial machines.

According to some embodiments of the invention, there is provided a device, system and method for detecting abnormal behavior in industrial machines. A sequence of log file messages may be received, recorded at one or more initial times by one or more loggers, of operations of one or more components in an industrial machine. The sequence of log file messages may be transformed into an anomaly severity sequence comprising a sequence of log tokens encoding the log file messages, time between log file token pairs, and/or a sequence of anomaly severity levels each associated with one or more of the log tokens. The anomaly severity sequence at the one or more initial times may be input into the large language model trained to predict anomaly severity histograms at one or more subsequent times. An anomaly severity histogram may be output predicting a plurality of M distinct probabilities that the one or more loggers will record log file messages encoded by one or more log keys associated with M respective distinct anomaly severity levels at the one or more subsequent times. Abnormal behavior may be predicted in the one or more components of the industrial machine logged by the one or more loggers at the one or more subsequent times when the anomaly severity histogram indicates a pattern of the M probabilities associated with the abnormal behavior. Upon predicting the abnormal behavior, a control command may be sent to the industrial machine to trigger automatically executing an action, for example, to alter the operation of the one or more components, to prevent the abnormal behavior from occurring before the one or more subsequent times.

### Brief Description of the Figures

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
Fig. **1** is a schematic illustration of an industrial machine comprising a logger generating log files analyzed by a machine learning engine to predict future anomaly severity histograms to detect log file anomalies, in accordance with some embodiments of the invention;
Fig. **2** is a schematic illustration of a single-sequence transformer to predict future anomaly severity histograms for log files, in accordance with some embodiments of the invention;
Figs. **3A-3B** are schematic illustrations of a multi-sequence transformer to predict future anomaly severity histograms for log files, in accordance with some embodiments of the invention;
Fig. **4** is a schematic illustration of a system for detecting abnormal behavior in industrial machines by predicting future anomaly severity histograms for log files, in accordance with some embodiments of the invention; and
Fig. **5** is a flowchart of a method for detecting abnormal behavior in industrial machines by predicting future anomaly severity histograms for log files, in accordance with some embodiments of the invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### Detailed Description of the Invention

Embodiments of the invention provide a large language model, such as a transformer, that inputs a sequence of log tokens representing log file messages recorded by one or more logger(s) measuring operations at one or more component(s) in one or more industrial machine(s) at an initial (current) time *ti*, and outputs a predicted anomaly severity histogram at a subsequent (future) time tj. An anomaly severity histogram estimates multiple M probabilities that the loggers will record anomalous log file messages associated with multiple M different respective severity levels of abnormal behavior at the industrial machine components.

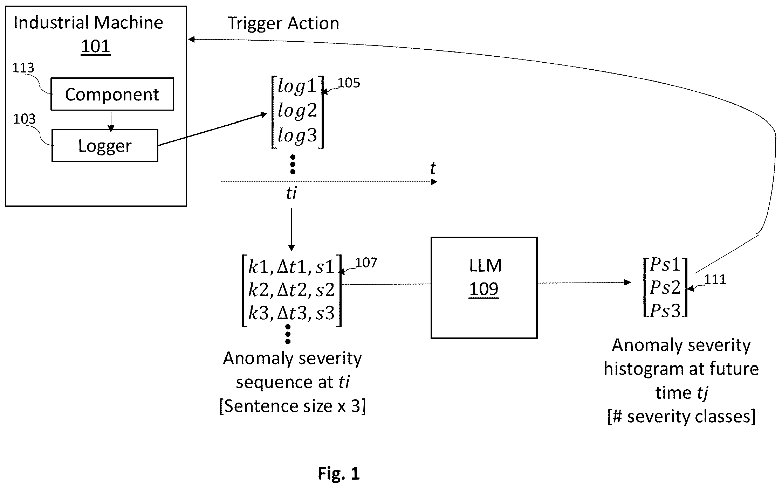

Reference is made to Fig. **1****,** which is a schematic illustration of an industrial machine **101** comprising one or more logger(s) **103** generating log files analyzed by a large language model **109** to predict future anomaly severity histograms to detect log file anomalies, in accordance with some embodiments of the invention.

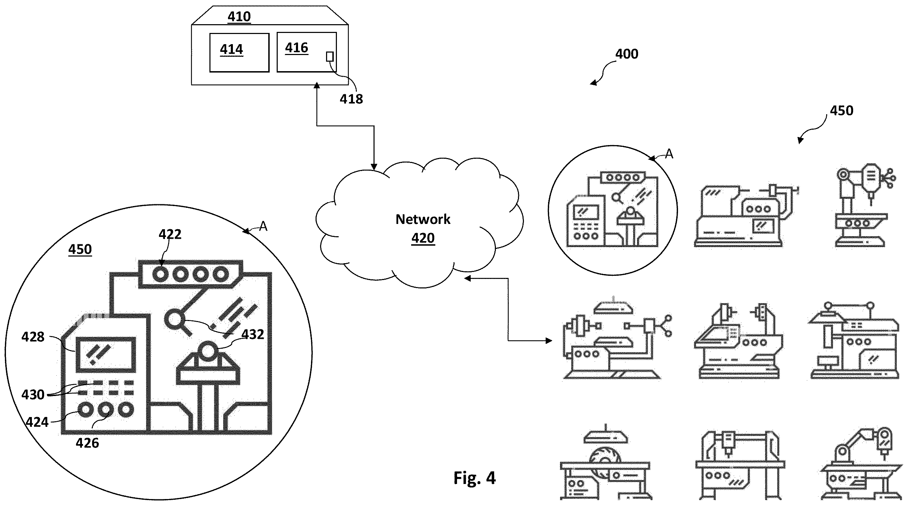

Logger(s) **103** (e.g., logger(s) **430** of Fig. **4****)** may record operation, status and/or function of one or more components **113** (e.g., component(s) **432** of Fig. **4****)** in industrial machine **101** (e.g., industrial machine(s) **450** of Fig. **4****)** to generate one or more log file(s) comprising a sequence of log messages {log1, log2, ..., logq} **105** recorded by logger(s) **103** at an initial (e.g., current) time *ti* (e.g., at a single time *ti* or over a duration up to the time t0, ..., *ti)*. The sequence of log messages **105** may be transformed to an anomaly severity sequence {*k*1, Δ*t*1, *s*1; *k*2, Δ*t*2*,* s2 ; ... ; *kp,* Δ*tp, sp*} **107** comprising uniform syntax of log tokens *(ki)* encoding the log file messages, time between log file token pairs (Δ*ti*), and a sequence of anomaly severity levels (*si*) each associated with one or more of the log tokens, at the initial time *ti*. Anomaly severity sequence **107** may have dimension equal to the sequence **107** length, its duration, or number of tokens therein *p* × 3. Other syntax and dimensions may be used. For example, sequence **107** format and/or data may be reordered, interchanged, replaced with equivalent or derivable data. In one example, time between log file token pairs (Δ*ti*) may be omitted when a standard or known time duration is used, or may be replaced with a start or end time associated with token *(ki).*

A large language model **109,** such as the transformers shown in Figs. **2-3B****,** may be trained to input anomaly severity sequences at initial times *ti* and output anomaly severity histograms at subsequent times *tj*. Upon inputting anomaly severity sequence **107** at the initial time *ti*, the large language model **109** may compute and output anomaly severity histogram **111** predicting a plurality of M distinct probabilities {*Ps*1*, Ps2,* ..., *PsM}* that the one or more loggers will record log file messages encoded by one or more log keys associated with M respective distinct anomaly severity levels {*s*1, *s2,* ..., *sM*} at the subsequent time *tj* (e.g., M = 5-10).

An anomaly detection device may analyze anomaly severity histogram **111** to predict abnormal behavior in the component(s) **113** of industrial machine **101** logged by logger(s) **103** at subsequent time *tj* when the received anomaly severity histogram **111** indicates a probability pattern trained to be associated with the abnormal behavior. The analysis may be performed, e.g., using rules-based or machine learning models.

In response to predicting the abnormal behavior, the anomaly detection device may send industrial machine **101** a control command to trigger industrial machine **101** to automatically execute an action (e.g., automatically alter component(s) **113** operation) to prevent the abnormal behavior from occurring before the subsequent time *tj*. Large language model **109** may thus be used to predict failures before they occur, are logged and/or are detected in a machine, enabling predictive maintenance to preemptively prevent a failure. In some embodiments, large language model **109** may be coupled, or operably connected, to industrial machine **101** controls to automatically adjust, start or stop component(s) **113** if future failure or error is predicted. In one example, when large language model **109** detects overheating, a signal may be automatically sent to a printing head component to reduce heat, stop printing and/or restart printing when the transformer detects or predicts the temperature has normalized.

LLM **109** predicting an anomaly severity histogram according to embodiments of the invention accelerates anomaly detection compared to predicting a next log sequence token. A next token prediction LLM models an N-dimensional search space to predict N probabilities that a next token following an input token sequence is any of N respective possible values (e.g., N is the logger vocabulary size or the number of distinct possible log tokens, such as, approximately 50,000 for the English language). In contrast, the large language model according to embodiments of the invention only models an M-dimensional search space to predict an anomaly severity histogram with M probabilities {*Ps*1, *Ps2,* ..., *PsM}* of logging a next token with M respective severity levels {s1, *s2,* ..., *sM}* (e.g., M is the number of distinct anomaly severity levels *si,* such as, 5-10). In practice, loggers encode vast numbers N of highly-specific log tokens to accurately record and diagnose machine behavior, whereas only relatively few M general anomaly severity levels may be used to identify the severity of that behavior, such that M is significantly less than N (e.g., M = 5 << N = 50,000).

Reducing the LLM search space from N-dimensions (for next token prediction) to a significantly smaller M-dimensions (for anomaly severity histogram prediction) alters the LLM data structures to create a significantly more compact large language model **109.** For example, as described in reference to the transformer of Fig. **2** below, some layers of next token LLM have dimensions *p* × *N* (e.g., 5 × 50,000) that are larger than dimensions of comparable layers in LLM **109** by a factor of at least ten(s) and up to hundred(s) of times. Because it is drastically more compact, M-dimension LLM **109** operates at significantly faster prediction and training speeds (e.g., at processor **414** and **424** of Fig. **4****),** reduces memory usage (e.g., in memory units **416** and **426** of Fig. **4****),** and reduces computations (e.g., executed by processor **414** and **424** of Fig. **4****)** compared to N-dimension LLMs. For example, the compact transformer of Fig. **2** reduces the dimensions of embedding input and output vectors from [5 × 50,000] in N-dimension LLMs to [5 × 256] yielding approximately a 200x reduction in storage usage and a 200x speedup in processing time for these vectors and their input layers, and further reductions in subsequent layers (e.g., depending on the number and size of the hidden layers).

Additionally, the next token LLM predicts one logkey at a time to forecast only one time step into the future (e.g., typically 1 millisecond). In contrast, due to its compactness and relatively small M-dimensional output space, LLM **109** may predict an anomaly severity histogram **111** for a significant time interval (e.g., 10 minutes of time into the future that may contain 600,000 time steps). Compared to the next token LLM, LLM **109** may increase the prediction timescale by factor of 600,000 in this example (e.g., executed at processor **414** and **424** of Fig. **4****).** Because prediction of one time-step at a time consumes impractical computational and memory resources, next token LLMs may try to increase the output size to be greater than 1, but this explodes output sizes by a factor of the timestep, which GPU hardware cannot practically manage for significant timescales (e.g., greater than 10 or 100). Because the output dimension of LLM **109** is based on the number of severity levels M, not on the future prediction timescale (also referred to as the "horizon size"), LLM **109** operates with the same efficiency regardless of the size of the time-step it predicts into the future. Compared to the next token LLM, LLM **109** may predict severity levels for 10 minutes in seconds or minutes instead of hours or days for 600,000 one-logkey-at-a-time or thousands of small scale (10-100 next token) iterations.

Reference is made to Fig. **2****,** which is a schematic illustration of a single-sequence transformer **100** to predict future anomaly severity histograms **104,** in accordance with some embodiments of the invention. Transformer **100** may be a (e.g., fully-connected) deep learning neural network. The left-side of Fig. **2** depicts the transformer's encoder **142** and the right-side of Fig. **2** depicts the transformer's decoder **144.** Dimensions of data structures are indicated in hard brackets to the right of the associated data structure and are provided as non-limiting examples.

Single-sequence transformer **100** may input an anomaly severity sequence **102,** e.g., {*k*1, Δ*t*1, *s*1; *k*2, *Δt2, s2* ; ... ; *kp, Δtp, sp*} of length p (e.g., 5, recorded over 5 initial times or intervals, up to a time ti). Anomaly severity sequence **102** may include a sequence of log tokens (*ki*) encoding log file messages, such as, words, subwords, or characters, from a vocabulary of N (e.g., 50,000) possible log tokens, times between log file token pairs (Δ*ti*), and a sequence of anomaly severity levels (*si*) from M (e.g., 5) possible log severity levels each associated with one or more of the log tokens.

Single-sequence transformer **100** may output an anomaly severity histogram **104** predicting a plurality of M distinct probabilities {*Ps*1, *Ps2,* ..., *Ps5*} that a future log key at a subsequent time will be associated with M respective distinct anomaly severity levels {s1, *s2,* ..., *s*5}. For example, a log token sequence encoding log messages, such as, "user stopped," "system stopped," or "machine stopped unexpectedly" are predicted to have high probabilities of "WARNING," "ERROR," or "CRITICAL" severity levels.

Whereas an LLM predicts a next token with an N-dimensional probability distribution for N possible tokens, LLM **100** according to embodiments of the invention predicts anomaly severity histogram **104** with a significantly smaller M-dimensional probability distribution for M possible severity levels, where M<<N. This significantly reduces the size of the LLM's data structures to generate a relatively compact and efficient model. Input severity embeddings **106** may embed each entry of anomaly severity sequence **102** *{ki, Δti, si}* into an embedded input severity vector **108** *Vi* in a high-dimensional vector space. Embedded input severity vectors **108** *Vi* may represent the interrelationship, such as, the semantic meanings, between each entry of anomaly severity sequence 102 {*ki, Δti, si}* and the other entries in the sequence **102.** Whereas an LLM predicting a next token generates embedded input token vectors of dimension [sentence length p × vocabulary size N] (e.g., 5 << 50,000), the LLM according to embodiments of the invention generates embedded input severity vectors **108** of dimension [number of severity levels x number of severity embeddings] (e.g., 5 × 256). An optimal number of severity embeddings for M = 5-10 has been experimentally determined to be 128, 256 or 512 and is significantly less than vocabulary size N.

Embedded input severity vectors **108** may be input into a multi-head self-attention layer **110** of encoder **142.** Layer **110** performs self-attention on vectors **108** by weighing the importance of different entries when making predictions for each entry of anomaly severity sequence **102** {*ki, Δti, si}.* Layer **110** performs multi-head self-attention by applying the self-attention mechanism multiple times, in parallel, to concurrently focus attention on (e.g., multiple or all) different entries of anomaly severity sequence **102.** For each entry {*ki, Δti, si*}*,* multi-head self-attention layer **110** may compute a weighted sum of all other entries' embedded input severity vectors **108,** with the weights determined by the other entries' relevance to the current entry *{ki, Δti, si}.* Compared to N-dimensional next token LLMs, the drastic reduction in dimensions of embedded input severity vectors **108** in transformer **100** cause multi-head self-attention layer **110** to operate thereon at significantly faster speeds (e.g., tens or hundreds times faster with tens or hundreds times fewer computations and memory resources). In this example, a reduction in the dimension of embedded input vectors from [5 × 50,000] in N-dimension LLMs to [5 × 256] in vectors **108** of LLM **100** yields approximately a 200x reduction in storage usage and a 200x speedup in processing time for this layer, and further reductions in subsequent hidden layers.

The output sequence of multi-head self-attention layer **110** may be input into fully connected layer **114.** Fully connected layer **114** may comprise a set of fully connected layers independently applied to each position in the sequence.

Encoder **142** may encode the outputs of fully connected layer **114** (e.g., normalized at layer **116)** into p encoded vectors **118** *EV₁, EV₂,* ... *EVp.*

Normalization layer **112** and/or **116** may combine and normalize inputs and/or outputs before and/or after each sub-layer (e.g., **110** and/or **114)** to stabilize and speed up training.

Because embedded input vectors **108** in severity LLM **100** is significantly more compact than in an LLM predicting a next token, for comparable accuracy therebetween multi-head self-attention layer **108,** fully connected layer **114,** and normalization layer **112** in LLM **100** all have a significantly smaller size (e.g., 5 × 128 or 256) than the size (e.g., 5 × 512) of those layers in the LLM predicting a next token.

When transformer **100** is iterated to predict anomaly severity histograms **104** at two or more future times or log messages, decoder **144** may input severity embeddings of the output anomaly severity histogram **120** from a previous iteration (e.g., {*Ps*1, *Ps2,* ...,*PsM*}) to predict the next anomaly severity histogram **104** in the current iteration. Output anomaly severity histogram **120** may be embedded by output severity embeddings **122** that embed each output severity entry *Psi* into a high-dimensional vector space. Embedded output severity vectors **124** may represent the interrelationship, such as, the semantic meanings, between each severity level's output probability *Psi* and the output probabilities for the other M-1 severity level in the output anomaly severity histogram **120.** Whereas a next token LLM generates embedded input token vector of dimension [timestep × vocabulary size N] (e.g., timestep × 50,000), the LLM according to embodiments of the invention generates embedded output severity vectors **124** of dimension [number of severity levels × number of severity embeddings] (e.g., 5 × 256). An optimal number of severity embeddings for M = 5-10 has been experimentally determined to be 128, 256 or 512 and is significantly less than vocabulary size N.

Transformer **100** may use a masked multi-head self-attention layer **126** to generate an output sequence weighing the importance of different probabilities in the anomaly severity histogram **120** for each severity level *si.* The mask may be used during training to obfuscate the known actual token (e.g., used for error correction) so the prediction of this token is not known until after its prediction is made. Compared to N-dimensional next token LLMs, the drastic reduction in dimensions of embedded input severity vectors **124** in transformer **100** cause multi-head self-attention layer **126** to operate thereon at significantly faster speeds (e.g., tens or hundreds times faster with tens or hundreds times fewer computations and memory resources). In this example, a reduction in the dimension of embedded output vectors from [1 × 50,000] in N-dimension LLMs to [5 × 256] in vectors **124** of LLM **100** yields approximately a 40x reduction in storage usage and a 40x speedup in processing time.

Decoder **144** may input *p* encoded vectors **118** *EV₁, EV₂,* ... *EVp,* and for example when the current iteration's anomaly severity histogram is predicated on a previous iteration's next anomaly severity histogram, may also input masked multi-head self-attention layer **126** output sequence, into multi-head self-attention layer **130.** The output of multi-head self-attention layer **130** may be input (e.g., normalized at layer(s) **128** and/or **132)** into fully connected layer **134.**

Decoder **144** may output the results of fully connected layer **134** (e.g., normalized at layer **136)** and modeled into an output by linear layer **138,** which is then passed to a softmax layer **140.** Softmax layer **140** may generate anomaly severity histogram **104** predicting a plurality of M distinct probabilities {*Ps*1, *Ps2,* ..., *PsM}* that a future log key at a subsequent time will be associated with M respective distinct anomaly severity levels {*s*1, *s*2, ..., *sM*}*.*

During training mode, transformer **100** may continuously (e.g., periodically) input the input sequence **102** until *p* entries are entered at one or more initial times. Transformer **100** may then predict anomaly severity histogram **104** at one or more subsequent times. The actual anomaly severity histogram may be generated from metadata of log files or measured component malfunctions (e.g., by self-supervised learning) and training errors may be calculated (e.g., as the difference between the predicted and actual anomaly severity histograms at the one or more subsequent times). Transformer **100** may update (e.g., all or a subset of) the weights of transformer **100,** e.g., using backpropagation, evolutionary modeling, or other error correction mechanisms to minimize errors. These operations may be repeated until the predicted and actual anomaly severity histograms match with an above threshold accuracy (e.g., the error or difference between prediction and actual result is smaller than a predefined threshold) and/or the predictive confidence of the softmax layer **240** satisfies a training termination criterion (e.g., the probability distribution, mean, standard deviation, or maximum value reaches a threshold range and/or converges). At this point, transformer **100** is trained, and may be retrained e.g. periodically or each time new data becomes available.

The relatively compact dimensions of LLM **100** for predicting severity levels (e.g., tens or hundreds of times smaller compared to predicting next tokens) accelerates training and prediction times, reduces memory usage, reduces computations, and widens the future prediction horizon times for anomaly detection in industrial machines. Increasing future prediction horizon times may allow more time for component(s) **113** to take corrective action to prevent and pre-emptively fix predicted errors before they occur. Widening the prediction horizon times can thus improve performance and function of industrial machines **101.** In some embodiments, because LLM **100** is relatively compact, larger strings of log token entries can be simultaneously input into sequences **102** to predict in larger batches of data. For example, reductions in embedded vector dimensions by a factor of tens or hundreds allows LLM **100** to process an increase in batch size of by that factor with comparable efficiency. Not only is it faster to predict for larger batches of data, but it is also more accurate because LLM **100** takes into account more interrelationships between tokens spanning larger time intervals to capture more log message patterns.

Industrial machines sometimes generate multiple log file tokens simultaneously or concurrently, e.g., for multiple concurrently operating components and/or multiple properties for a single component. For example, an industrial machine may have tens or hundreds of "logger" components or output ports that write to a log file periodically and/or triggered by an event. The single-sequence transformer **100** of Fig. **2****,** however, is adapted to input and output a single ordered anomaly severity sequence {*k*1, Δ*t*1, *s*1; k2, Δ*t*2, s2 ; ... ; *kp,* Δ*tp, sp}.* Taking a parallelized set of concurrently generated log file tokens and ordering them into a single sequence **102** may impose an artificial and inaccurate sequential relationship and/or timing between parallel generated tokens.

To solve this problem, embodiments of the invention provide a multi-dimensional or multi-sequence transformer, e.g., as shown in Figs. **3A-3B****,** that inputs and outputs multiple anomaly severity sequences, in parallel, thus capturing the accurate parallelized timing and/or relationships between log file messages of multiple loggers.

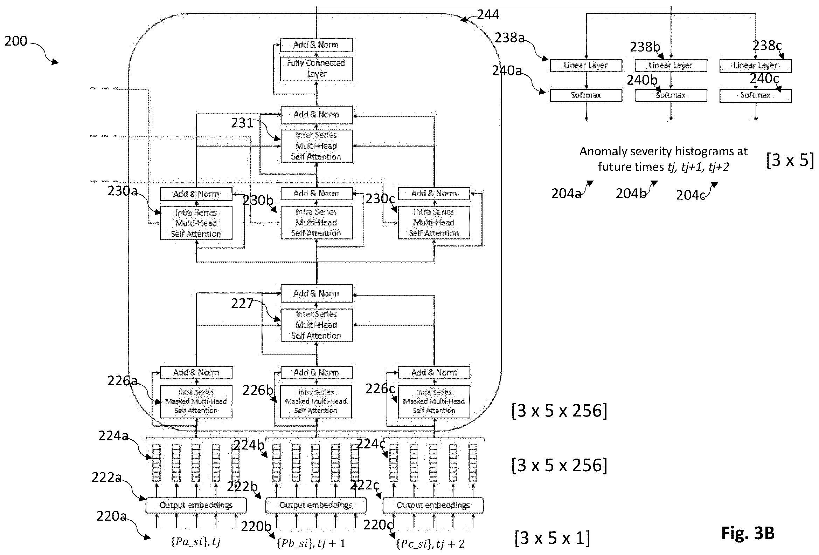

Reference is made to Figs. **3A-3B****,** which schematic illustrate a multi-sequence transformer **200** to predict future anomaly severity histograms for log files, in accordance with some embodiments of the invention. Transformer **200** is divided into two figures such that the right-most dotted arrows of Fig. **3A** connect to the left-most dotted lines of Fig. **3B****.** Dimensions of data structures in these figures are indicated in hard brackets to the right of the associated data structure and are provided as non-limiting examples.

Multi-dimensional or multi-sequence transformer **200** inputs a plurality of integer Q anomaly severity sequences **202a, 202b, 202c,** ... in parallel, for example, each generated by a different one of a plurality of Q loggers of an industrial machine (instead of a single input sequence **102** in Fig. **2****).** Each sequence **202a, 202b, 202c,** ... may have the same (or different) integer length or number of entries *ki,* Δ*ti, si* (e.g., recorded at times t1, t2, ..., T). Components logged synchronously (e.g., periodically) may have non-zero tokens at each time, while components logged asynchronously (e.g., triggered by component-specific events) may have zero or null tokens (e.g., when no data is recorded) or combined tokens (e.g., averaged or self-verifying values or codes when recording at a higher frequency than the rate of the log file sequence).

A plurality of Q input embeddings **206a, 206b, 206c,** ... may each embed a respective one of the plurality of Q input sequences **202a, 202b, 202c,** ... into T embedded input vectors **208a, 208b, 208c,** ... in a high-dimensional vector space to generate a total of a product of the number of input sequences Q × T embedded input vectors. Each of the Q groups of T embedded input vectors **208a, 208b, 208c,** ... may be input into encoder **242.** Whereas an LLM predicting a next token generates embedded input token vectors of dimension [Q × sentence length p × vocabulary size N] (e.g., 3 × 5 × 50,000), the transformer **200** generates embedded input severity vectors **208a, 208b, 208c,** ... of dimension [Q × number of severity levels × number of severity embeddings (e.g., a number of patterns representing interrelationships between log tokens and the anomaly severity levels)] (e.g., 3 × 5 × 256). An optimal number of severity embeddings for M = 5-10 has been experimentally determined to be 128, 256 or 512 and is significantly less than vocabulary size N. In the above example, a reduction in the dimension of embedded input vectors from [3 × 5 × 50,000] in N-dimension LLMs to [3 × 5 × 256] in each of vectors **208a, 208b, 208c,** ... of LLM **200** yields approximately a 200x reduction in storage usage and a 200x speedup in processing time for this layer, and further reductions in subsequent hidden layers. Multi-sequence transformer **200** may have an encoder **242** comprising a plurality of integer Q "Intra Series" multi-head self-attention layers **210a, 210b, 210c,** ... and an "Inter Series" multi-head self-attention layer **211** (instead of a single sequence multi-head self-attention layer **110** in Fig. 2). Each of the Q groups of T embedded input vectors **208a, 208b, 208c,** ... may be input into a respective one of the intra series multi-head self-attention layers **210a, 210b, 210c,** .... Each intra series multi-head self-attention layer **210i** performs self-attention on the T embedded vectors **208i** embedding each single input sequence **202i** by weighing the importance of embeddings of different tokens in the same input sequence **202i,** in parallel, for each token in the same sequence. The plurality of Q intra series multi-head self-attention layers **210a, 210b, 210c,** ... thus output a plurality of Q respective groups of T intra series attention vectors that identify intra-logger embedded patterns within each single input sequence **202i** (between events recorded by the same logger). Compared to next token LLMs, the drastic reduction in dimensions of embedded input severity vectors **208a, 208b, 208c,** ... in transformer **200** cause the plurality of Q intra series multi-head self-attention layers **210a, 210b, 210c,** ... to operate thereon at significantly faster speeds (e.g., tens or hundreds times faster with tens or hundreds times fewer computations and memory resources). In this example, a reduction in the dimension of each of the embedded input severity vectors **208a, 208b, 208c,** ... from [3 × 5 × 50,000] in N-dimension LLMs to [3 × 5 × 256] in vectors **208a, 208b, 208c,** ... of transformer **200** yields approximately a 200x reduction in storage usage and a 200x speedup in processing time for each of the plurality of Q intra series multi-head self-attention layers **210a, 210b, 210c,** ..., and further reductions in subsequent hidden layers.

The Q × T intra series attention vectors are then input into the inter series multi-head self-attention layer **211.** Inter series multi-head self-attention layer **211** performs self-attention on the Q × T intra series attention vectors by weighing the importance of all other vector indices, ..., in parallel, for each vector index. Since each of the Q groups of intra series attention vectors identify embedded patterns within each single input sequence **202i** logged by the same logger, the Q × T inter series attention vectors which identify patterns across these Q groups (for all vector index combinations) identify embedded severity patterns associated with multiple different input sequences logged by multiple different loggers. These inter-logger embedded patterns across different logger sequences (between events recorded by different loggers) are often important for detecting normal or abnormal behavior. For example, different components of a system may be interconnected, such that multiple components must be collectively monitored together, and may be collectively responsible for, or supporting evidence of, normal or abnormal component function. In one example, a change in temperature in one component may be normal if it occurs concurrently with a change in pressure in another component, but abnormal if it occurs alone. Inter series multi-head self-attention layer **211** may thus detect inter-component patterns recorded in parallel across multiple different loggers. Accordingly, the inter-logger patterns detected in multi-sequence transformer **200** of Figs. **3A-3B** (detecting inter multi-component patterns recorded concurrently by different loggers) could not be detected by using multiple single-sequence transformers **100** of Fig. **2** (each only detecting single intra-component patterns recorded by the same single logger).

Encoder **242** may input the Q × T inter series attention vectors into a fully connected layer and/or normalization layer(s). Encoder **242** in Fig. **3A** may then output Q × T encoded vectors **218** (e.g., the number Q of input sequences × the length T of each sequence) (e.g., whereas encoder **142** of Fig. **2** encodes a single vector of length T).

In Fig. **3B****,** when transformer **200** is iterated (e.g., to predict anomaly severity histograms **204a, 204b, 204c,** ... for multiple future subsequent iterations or times T+1, T+2, ...), decoder **244** may input severity embeddings of the output anomaly severity histograms **204a, 204b, 204c,** ... from a previous iteration (e.g., {*Paₛᵢ*}, {*Pbₛᵢ*}, {*Pcₛᵢ*} ∀*i* = 1, ..., *M* at respective times T+1, T+2, ...) to predict the next set of output anomaly severity histograms **204a, 204b, 204c,** ... in the current iteration.

The Q output sequences **220a, 220b, 220c** may each be embedded by a respective one of the plurality of N output embeddings **222a, 222b, 222c,** ... into T embedded output vectors **224a, 224b, 224c,** ... in a high-dimensional vector space, to generate a total of Q × T embedded output vectors. Embedded output severity vectors **224a, 224b, 224c,** ... may each represent the interrelationship, such as, the semantic meanings, between each respective logger's histogram output probabilities *Psi* for each severity level and the output probabilities for the logger's other M-1 severity level in the output anomaly severity histogram **204i.**

Each of the Q groups of T embedded output vectors **224a, 224b, 224c,** ... may be input into a respective one of the Q intra series masked multi-head self-attention layers **226a, 226b, 226c,** ... to generate a respective one of a plurality of integer Q intra series output attention vectors. Each of the Q groups of T intra series output attention vectors may identify intra-logger embedded patterns within each single output sequence **220i** (between events recorded by the same logger). The Q × T intra series output attention vectors are then input into the inter series multi-head self-attention layer **227.** Inter series multi-head self-attention layer **227** performs self-attention on all index combinations of the Q × T intra series output attention vectors, in parallel, to identify patterns associated across multiple different output sequences logged by multiple different loggers. Compared to next token LLMs, the drastic reduction in dimensions of embedded input severity vectors **224a, 224b, 224c,** ... in transformer **200** cause the Q intra series masked multi-head self-attention layers **226a, 226b, 226c,** ... to operate thereon at significantly faster speeds (e.g., tens or hundreds times faster with tens or hundreds times fewer computations and memory resources). In this example, a reduction in the dimension of embedded output vectors from [3 × 1 × 50,000] in N-dimension LLMs to [3 × 5 × 256] in vectors **224a, 224b, 224c,** ... of transformer **200** yields approximately a 40x reduction in storage usage and a 40x speedup in processing time.

Decoder **244** in Fig. **3B** may also comprise a plurality of integer Q intra series masked multi-head self-attention layers **230a, 230b, 230c,** ... and an inter series multi-head self-attention layer **231.** Decoder **244** may input Q × T encoded vectors **218** from Fig. **3A****,** and for example when the current iteration's anomaly severity histograms are predicated on a previous iteration's anomaly severity histograms, may also input Q × T masked multi-head self-attention layer **226a, 226b, 226c,** ... output sequence from Fig. **3B****.**

The Q intra series masked multi-head self-attention layers **230a, 230b, 230c,** ... may perform self-attention analysis on the Q groups of T vectors independently and the inter series multi-head self-attention layer **231** may perform self-attention analysis across all Q × T vectors interdependently. The output of multi-head self-attention layer **231** may be input into a fully connected layer and/or normalized layer(s).

Decoder **244** may then output Q groups of T vectors to be sorted into and modeled by a plurality of integer Q respective linear layers **238a, 238b, 238c,** ... into a plurality of integer Q results respectively associated with the plurality of Q input sequences **202a, 202b, 202c,** .... Each of the Q respective linear layers **238a, 238b, 238c,** ... is then passed to a respective one of a plurality of N softmax layers **240a, 240b, 240c,** .... The plurality of Q separate softmax layers **240a, 240b, 240c,** ... may generate N separate respective anomaly severity histogram **204a, 204b, 204c,** ..., {*Paₛᵢ*}, {*Pbₛᵢ*}, {*Pcₛᵢ*} ∀*i* = 1, ..., M at subsequent (future) times T+1, T+2, ... predicting, for each histogram, a plurality of M distinct probabilities {*Ps*1, *Ps2,* ..., *PsM}*that a future log key at a subsequent time will be associated with M respective distinct anomaly severity levels {*s*1, *s*2, ..., sM}.

Multi-sequence transformer **200** thus predicts a plurality of Q anomaly severity histograms **204a, 204b, 204c,** ... in parallel, based on the multi-logger patterns embedded in multiple different input anomaly severity sequences **202a, 202b, 202c,** ..., recorded by multiple different loggers, for example, detected by inter series multi-head self-attention layer(s) **211, 227** and/or **231.** In some embodiments, because performance and function of multiple components and/or loggers is often interrelated, the multi-sequence transformer **200** ability to predict normal or abnormal behavior based on interrelationships among multiple loggers and/or components may improve log file training accuracy for abnormal behavior prediction, for example, as compared to the single-sequence transformer **100** that can only predict behavior based on a single logger or component at a time.

During training mode, multi-sequence transformer **200** continuously inputs the N input anomaly severity sequences **202a, 202b, 202c,** ... until time T. Transformer **200** may then predict the anomaly severity histograms **204a, 204b, 204c,** ..., at one or more subsequent times e.g. T+1 for each of the N sequences (e.g., the next reading for temperature, pressure, humidity, etc.). The actual anomaly severity histogram may be generated from metadata of log files or measured component malfunctions (e.g., by self-supervised learning) and training errors may be calculated (e.g., as the difference between the predicted and actual anomaly severity histograms at the one or more subsequent times). Transformer **200** may update (e.g., all or a subset of) the weights of transformer **200,** e.g., using backpropagation, evolutionary modeling, or other error correction mechanisms to minimize errors. These operations may be repeated until the predicted and actual logged tokens match with an above threshold accuracy (e.g., the error or difference between prediction and actual result is smaller than a predefined threshold) and/or the predictive confidence of softmax layers **240a, 240b, 240c,** ..., satisfies a training termination criterion (e.g., the probability distribution, mean, standard deviation, or maximum value reaches a threshold range and/or converges). At this point, transformer **200** is trained, and may be retrained e.g. periodically or each time new data becomes available.

Components not specifically described in reference to Figs. **3A-3B** may operate similarly to those described in Fig. **2****,** e.g., modified based on the parallelized multi-sequence architecture.

During training of single-sequence transformer **100** of Fig. **2** or multi-sequence transformer **200** of Figs. **3A-3B****,** the probabilities of softmax layer(s) may be used as a measure of error to calibrate error correction. For example, if the probabilit(ies) of the output anomaly severity histograms are relatively low (e.g., less than 0.5 or 50% change of being correct), relatively high error correction is needed. For example, the lower the probability (greater the error), the higher the degree of correction the transformer training applies (e.g., greater the weight correction and/or number of training iterations). In some embodiments, training continues until one or more metric(s) of softmax layer(s) probabilit(ies) (e.g., distribution, mean, standard deviation, maximum value) reach one or more threshold range(s) and/or converge to satisfy one or more training termination criteria.

Single-sequence transformer **100** of Fig. **2** and multi-sequence transformer **200** of Figs. **3A-3B** are illustrated with example layer configurations that may be reordered, duplicated, substituted and/or deleted. In one example, in Figs. **3A-3B****,** the order of intra and inter series components may be switched, so that for example, embedded input vectors **208a, 208b, 208c,** ... are input into an inter series multi-head self-attention layer before they are input into Q intra series multi-head self-attention layers. The above benefits of computational speed-up and memory reduction at the input layer may thus occur at the inter series multi-head self-attention layer. Additionally or alternatively, either encoder or decoder may be deleted or one or both of encoder and decoder may be replicated to add as many iterations of encoding and/or decoding as desired. Additionally or alternatively, the number of Q intra series multi-head self-attention layers executed in parallel may be increased to input one or more input embedding vectors into multiple intra series multi-head self-attention layers. Additionally or alternatively, multiple inter series multi-head self-attention layers may be executed in parallel. Additionally or alternatively, skip connections may be added throughout the transformers **100** and **200** to add extra input to one or more layers. For example, skip connection **209** in Fig. **3A** input raw embedded input vector **208a** into inter series multi-head self-attention layer **211** (e.g., in addition to intra series attention vectors). Any other skip connections may be used.

Transformers described in reference to Figs. **2-3B** may operate as described in U.S. patent application No. 18/458,289 filed on August 30, 2023, which is incorporated herein by reference in its entirety.

Data structures described in reference to Figs. **1-3B** may be stored in memory (e.g., memory units **416** and **426** of Fig. **4****)** and generated and processed by a processor or controller (e.g., processor **414** and **424** of Fig. **4****).**

Reference is made to Fig. **4****,** which schematically illustrates a system **400** for analyzing log files of industrial machine(s) **450** using large language model(s), in accordance with some embodiments of the invention. System **400** may store and/or generate an LLM (e.g., LLM **109,** transformer **100** and/or transformer **200),** store and/or generate industrial machine log files, train and/or predict log file tokens using LLM 109, transformer **100** and/or transformer **200,** and/or predict and/or prevent industrial machine **450** failure or malfunction, as described in reference to Figs. **1-3B** and **5.**

System **400** may include one or more device(s) **450,** such as industrial machines or any other device that generates log files, and one or more remote server(s) **410** accessible to device(s) **450** via a network and/or computing cloud **420.** Typically, the LLM is trained by remote server **410** and run for prediction remotely at remote server **410**, or locally at one or more devices **450,** although either remote server **410** and/or local devices **450** may train and/or predict the LLM according to embodiments of the invention. In particular, sparsifying the LLM significantly reduces the computational effort for prediction and training, as compared to conventional fully-activated neural networks or layers, to allow local devices **450,** which may have limited memory and processing capabilities, to quickly and efficiently perform such prediction and/or training. When local devices **450** perform training and runtime prediction, remote server **410** may be removed. Removing remote training and/or prediction may allow local devices **450** to operate the LLM even if they are disconnected from the cloud, if the input rate is so high that it is not feasible to continuously communicate with the cloud, or if very fast prediction is required where even the dedicated hardware is not fast enough today (e.g., deep learning for high frequency trading).

Remote server **410** has a memory **416** and processor **414** for storing and retrieving a LLM and log file(s). Remote server **410** may store a complete LLM (e.g., transformer **100** of Fig. **2** or **200** of Figs. **3A-3B****)** and remote processor **414** may activate the LLM for training and/or prediction. In some embodiments, remote server **410** may have specialized hardware including a large memory **416** for storing a transformer / log file(s) and a specialized processor **414** (e.g., a GPU). Memory **416** may store data **418** including a training dataset of log file(s) and data representing a plurality of weights of synapses or filters of the LLM. Data **418** may also include code (e.g., software code) or logic, e.g., to enable storage and retrieval of data **418** according to embodiments of the invention.

An exploded view "A" of a representative industrial machine **450** is shown in Fig. **4****.** All other industrial machines **450** may have any combination of the same or different components described in reference to A. Industrial machine(s) **450** may include a plurality of loggers **430** that may be hardware or software programs that generate log files of recorded or measured parameters of one or more hardware or software components **432.** The correspondence between loggers **430** and the hardware component **432** for which the logger records data may be one-to-one, one-to-many, many-to-one or many-to-many. For example, two loggers may record the temperature and pressure, respectively, of the same 3D printer.

Remote server **410** and/or industrial machine(s) **450** may each include one or more memories **416** and/or **426** for storing a LLM (e.g., transformer **100** of Fig. **1** **or 200** of Figs. **3A-3B****)** provided in some embodiments of the invention. Memories **416** and/or **426** may store each of a plurality of weights of synapses or filters of the transformers and one or more associated input anomaly severity sequences, output anomaly severity histograms, input embeddings, output embeddings, input embedded vectors, output embedded vectors, intra series attention vectors, inter series attention vectors, encoded vectors, softmax probabilities, etc. Remote server **410** and/or industrial machine(s) **450** may each include one or more processor(s) **414** and/or **424** for executing the LLM for training and/or prediction, to predict abnormal behavior of industrial machine(s) **450** by analyzing anomaly severity histogram associated with the log file messages output by loggers **430.** During prediction, the LLM is run forward once. During training, the LLM is run twice, once forward to generate an output and once backwards for error correction (e.g., backpropagation), repeated many iterations until training is complete.

Remote processor **414** and/or local processor **424** may store a plurality of Q input anomaly severity sequences comprising t log tokens *(ki),* times between log file token pairs (Δti), and anomaly severity levels (*si*) associated with one or more of the log tokens, each ith anomaly severity sequence generated by a different ith one of a plurality of respective logger **430,** for example, recording one or more industrial machine components **432.** Remote processor **414** and/or local processor **424** may input t embeddings of each of Q input sequences of log file tokens into Q respective intra sequence multi-head self-attention layers and output Q respective intra sequence attention vectors identifying t patterns between token anomaly severity levels within the same input sequence and logged by the same logger **430.** Remote processor **414** and/or local processor **424** may input the Q intra sequence attention vectors into an inter sequence multi-head self-attention layer and output Q × t inter sequence attention vectors identifying Q × *t* patterns associated with tokens from multiple different input sequences and logged by multiple different loggers **430.** Remote processor **414** and/or local processor **424** may generate, based on machine learning of the Q × *t* inter sequence attention vectors, a plurality of Q softmax layers of Q distinct anomaly severity histograms each predicting a plurality of M distinct probabilities { *Ps*1, *Ps2,* ..., *PsM}* that the one or more loggers will record log file messages encoded by one or more log keys associated with M respective distinct anomaly severity levels {*s*1, *s*2, ..., *sM}* at the one or more subsequent times.

Network **420,** which connects industrial machine(s) **450** and remote server **410,** may be any public or private network such as the Internet. Access to network **420** may be through wire line, terrestrial wireless, satellite or other systems well known in the art.

Industrial machine(s) **450** and remote server **410** may include one or more controller(s) or processor(s) **414** and **424,** respectively, for executing operations according to embodiments of the invention and one or more memory unit(s) **416** and **426,** respectively, for storing data **418** and/or instructions (e.g., software for applying methods according to embodiments of the invention) executable by the processor(s). Processor(s) **414** and **424** may include, for example, a central processing unit (CPU), a graphical processing unit (GPU, a field-programmable gate array (FPGA), an application-specific integrated circuit (ASIC), a digital signal processor (DSP), a microprocessor, a controller, a chip, a microchip, an integrated circuit (IC), or any other suitable multi-purpose or specific processor or controller. Memory unit(s) **416** and **426** may include, for example, a random access memory (RAM), a dynamic RAM (DRAM), a flash memory, a volatile memory, a non-volatile memory, a cache memory, a buffer, a short term memory unit, a long term memory unit, or other suitable memory units or storage units.

Other devices and configurations may be used, for example, data **418** may be stored locally in memory **426** and no separate server **410** may be used.

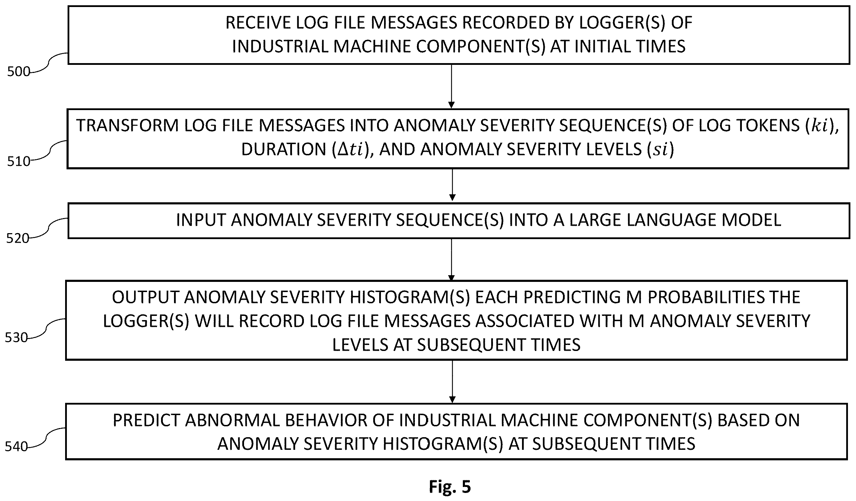

Reference is made to Fig. **5****,** which is a flowchart of a method for detecting abnormal behavior in industrial machines by predicting future anomaly severity histograms for log files, in accordance with some embodiments of the invention. The operations of Fig. **5** may be executed by a processor (e.g., one or more processor(s) **414** and/or **424** of Fig. **4****)** using data stored in a memory (e.g., one or more memory unit(s) **416** and/or **426** of Fig. **4****).**

In operation **500,** a processor may receive, from one or more loggers recording operations of one or more components in an industrial machine, a sequence of log file messages {log1, log2, ... , logq} recorded by the one or more loggers at one or more initial times.

In operation **510,** a processor may transform the sequence of log file messages into an anomaly severity sequence {*k*1, Δ*t*1, *s*1; *k*2, Δ*t2*, *s*2 ; ...; *kp,* Δ*tp, sp*} comprising a sequence of log tokens *(ki)* encoding the log file messages, time between log file token pairs (Δti), and/or a sequence of anomaly severity levels (si) each associated with one or more of the log tokens. In some embodiments the processor may perform self-supervised training to automatically label the sequence of log tokens *(ki)* with the sequence of anomaly severity levels (si), e.g., based on the associated log message metadata or the log messages themselves, using rules, machine learning or other analysis.

In operation **520,** a processor may input the anomaly severity sequence at the one or more initial times into the large language model trained to predict anomaly severity histograms at one or more subsequent times. Since the LLM models anomaly severity histogram for a number M of anomaly severity levels that is significantly smaller than a number N of all possible log tokens, modeling those severity levels provides a relatively more compact and efficient model that uses reduced dimensional data structures (see e.g., Figs. **2-3B****),** reduced memory usage, reduced computations, and increases processing speeds, compared to next token LLM prediction. Reduced dimensional input data structures (e.g., **108, 124** of Fig. **2** and/or **208a, 208b, 208c,** ..., **224a, 224b, 224c,** of Figs. **3A-3B****)** having a dimension on an order of a product of the number M of anomaly severity levels and a number of patterns representing interrelationships between log tokens and the anomaly severity levels result in reduced processing by the input layer (e.g., **1108, 126** of Fig. **2** and/or **210a, 210b, 210c,** ..., **226a, 226b, 226c,** of Figs. **3A-3B****)** and/or one or more subsequent layers. The input layer (e.g., **1108, 126** of Fig. **2** and/or **210a, 210b, 210c,** ..., **226a, 226b, 226c,** of Figs. **3A-3B****).**

In operation **530,** a processor may output from the large language model, based on the anomaly severity sequence at the one or more initial times, an anomaly severity histogram predicting a plurality of M distinct probabilities {*Ps*1, *Ps2,* ..., *PsM}* that the one or more loggers will record log file messages encoded by one or more log keys associated with M respective distinct anomaly severity levels {*s*1, *s2*, ..., *sM*} at the one or more subsequent times. The anomaly severity histogram may predict the same number M of probabilities for any timescale defined by the one or more subsequent times and so need only predicted once with one LLM execution to determine severity level prediction for a large future timescale (e.g., executed once for a 10 minute duration), whereas a next token prediction is determined for a particular time and thus is iterated many times for larger timescales (e.g., executed thousands of times for a 10 minute duration).

In operation **540,** a processor may predict abnormal behavior in the one or more components of the industrial machine logged by the one or more loggers at the one or more subsequent times when the anomaly severity histogram indicates a pattern of the M probabilities trained to be associated with the abnormal behavior. Upon predicting the abnormal behavior, a processor may send the industrial machine a control command (e.g., "Triger Action" control command in Fig. **1****)** to trigger the industrial machine to automatically execute an action to prevent the abnormal behavior from occurring before the one or more subsequent times. The control command may trigger the industrial machine to automatically alter the operation of the one or more components predicted to have abnormal behavior.

In some embodiments, the large language model of operation **520** is a single-sequence transformer (e.g., **100** of Fig. **2****).** This single-sequence transformer may generate embedded input and/or output severity vectors representing interrelationships between entries of input and/or output anomaly severity sequence, wherein the embedded input and/or output severity vectors have a dimension on an order of a product of embedding input and/or output severity vectors. The single-sequence transformer may then process the embedded input and/or output severity vectors at an encoder and/or decoder of the transformer.

In some embodiments, the large language model of operation **520** is a multi-sequence transformer (e.g., **200** of Fig. **3A-3B****).** This multi-sequence transformer may input a plurality of anomaly severity sequences of log file tokens transformed from a plurality of sequences of log file messages generated by a plurality of respective loggers. The multi-sequence transformer may generate a plurality of embedded input and/or output severity vectors derived from the plurality of respective anomaly severity sequences. The multi-sequence transformer may input the plurality of embedded input and/or output severity vectors into a plurality of distinct respective intra sequence multi-head self-attention layers to output a plurality of distinct respective sets of intra sequence attention vectors, each set identifying patterns associated with relationships among entries within the same anomaly severity sequence associated with the same logger. The multi-sequence transformer may input embedding patterns derived from a combination of the plurality of anomaly severity sequences into a same inter sequence multi-head self-attention layer to output a plurality of interrelated sets of inter sequence attention vectors identifying patterns associated with relationships among entries across multiple different ones of the anomaly severity sequences generated by multiple different loggers.

Other operations or orders of operations may be used.

The term large language model may refer to any large language model including, but not limited to one or more transformers, examples of which are schematically illustrated in Figs. **2** (single-sequence transformer **100)** and/or Figs. **3A-3B** (multi-sequence transformer **200).**

In the foregoing description, various aspects of the present invention are described. For purposes of explanation, specific configurations and details are set forth in order to provide a thorough understanding of the present invention. However, it will also be apparent to persons of ordinary skill in the art that the present invention may be practiced without the specific details presented herein. Furthermore, well known features may be omitted or simplified in order not to obscure the present invention.

Unless specifically stated otherwise, as apparent from the following discussions, it is appreciated that throughout the specification discussions utilizing terms such as "processing," "computing," "calculating," "determining," or the like, refer to the action and/or processes of a computer or computing system, or similar electronic computing device, that manipulates and/or transforms data represented as physical, such as electronic, quantities within the computing system's registers and/or memories into other data similarly represented as physical quantities within the computing system's memories, registers or other such information storage, transmission or display devices.

The aforementioned flowchart and block diagrams illustrate the architecture, functionality, and operation of possible implementations of systems and methods according to various embodiments of the present invention. In this regard, each block in the flowchart or block diagrams may represent a module, segment, or portion of code, which may comprise one or more executable instructions for implementing the specified logical function(s). In some alternative implementations, the functions noted in the block may occur out of the order noted in the figures or by different modules. Unless explicitly stated, the method embodiments described herein are not constrained to a particular order or sequence. Additionally, some of the described method embodiments or elements thereof can occur or be performed at the same point in time. Each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

Embodiments of the invention may include an article such as a non-transitory computer or processor readable medium, or a computer or processor non-transitory storage medium, such as for example a memory (e.g., memory units **416** and **426** of Fig. **4****),** a disk drive, or a USB flash memory, encoding, including or storing instructions, e.g., computer-executable instructions, which, when executed by a processor or controller (e.g., processor **414** and **424** of Fig. **4****),** carry out methods disclosed herein.

In the above description, an embodiment is an example or implementation of the inventions. The various appearances of "one embodiment," "an embodiment" or "some embodiments" do not necessarily all refer to the same embodiments. Although various features of the invention may be described in the context of a single embodiment, the features of embodiments may also be provided separately or in any suitable combination. Conversely, although the invention may be described herein in the context of separate embodiments for clarity, the invention may also be implemented in a single embodiment. Reference in the specification to "some embodiments", "an embodiment", "one embodiment" or "other embodiments" means that a particular feature, structure, or characteristic described in connection with the embodiments is included in at least some embodiments, but not necessarily all embodiments, of the inventions. It will further be recognized that the aspects of the invention described hereinabove may be combined or otherwise coexist in embodiments of the invention.

The descriptions, examples, methods and materials presented in the claims and the specification are not to be construed as limiting but rather as illustrative only. While certain features of the present invention have been illustrated and described herein, many modifications, substitutions, changes, and equivalents may occur to those of ordinary skill in the art. It is, therefore, to be understood that the appended claims are intended to cover all such modifications and changes as fall with the true spirit of the invention.

While the invention has been described with respect to a limited number of embodiments, these should not be construed as limitations on the scope of the invention, but rather as exemplifications of some of the preferred embodiments. Other possible variations, modifications, and applications are also within the scope of the invention. Different embodiments are disclosed herein. Features of certain embodiments may be combined with features of other embodiments; thus certain embodiments may be combinations of features of multiple embodiments.

## Claims

1. A method of detecting abnormal behavior in industrial machines, the method comprising:
receiving, from one or more loggers recording operations of one or more components in an industrial machine, a sequence of log file messages recorded by the one or more loggers at one or more initial times;
transforming the sequence of log file messages into an anomaly severity sequence comprising a sequence of log tokens encoding the log file messages, time between log file token pairs, and a sequence of anomaly severity levels each associated with one or more of the log tokens;
inputting the anomaly severity sequence at the one or more initial times into the large language model trained to predict anomaly severity histograms at one or more subsequent times;
outputting from the large language model, based on the anomaly severity sequence at the one or more initial times, an anomaly severity histogram predicting a plurality of M distinct probabilities that the one or more loggers will record log file messages encoded by one or more log keys associated with M respective distinct anomaly severity levels at the one or more subsequent times; and
predicting abnormal behavior in the one or more components of the industrial machine logged by the one or more loggers at the one or more subsequent times when the anomaly severity histogram indicates a pattern of the M probabilities associated with the abnormal behavior.

2. The method of claim 1 comprising, upon predicting the abnormal behavior, sending the industrial machine a control command to trigger the industrial machine to automatically execute an action to prevent the abnormal behavior from occurring before the one or more subsequent times.

3. The method of claim 2, wherein the control command triggers the industrial machine to automatically alter the operation of the one or more components predicted to have abnormal behavior.

4. The method of claim 1, wherein the number M of anomaly severity levels is significantly smaller than a number N of log tokens.

5. The method of claim 1, wherein one or more layers of the large language model process the anomaly severity sequence that is represented by a data structure having a dimension on an order of a product of the number M of anomaly severity levels and a number of patterns representing interrelationships between log tokens and the anomaly severity levels.

6. The method of claim 1, wherein the anomaly severity histogram predicts the same number M of probabilities for any timescale defined by the one or more subsequent times.

7. The method of claim 1, wherein the large language model is a single-sequence transformer, the method further comprising:
generating embedded input and/or output severity vectors representing interrelationships between entries of input and/or output anomaly severity sequence, wherein the embedded input and/or output severity vectors have a dimension on an order of a product of embedding input and/or output severity vectors; and
processing the embedded input and/or output severity vectors at an encoder and/or decoder of the transformer.

8. The method of claim 1, wherein the large language model is a multi-sequence transformer, the method further comprising:
inputting a plurality of anomaly severity sequences of log file tokens transformed from a plurality of sequences of log file messages generated by a plurality of respective loggers;
generating a plurality of embedded input and/or output severity vectors derived from the plurality of respective anomaly severity sequences;
inputting the plurality of embedded input and/or output severity vectors into a plurality of distinct respective intra sequence multi-head self-attention layers to output a plurality of distinct respective sets of intra sequence attention vectors, each set identifying patterns associated with relationships among entries within the same anomaly severity sequence associated with the same logger; and
inputting embedding patterns derived from a combination of the plurality of anomaly severity sequences into a same inter sequence multi-head self-attention layer to output a plurality of interrelated sets of inter sequence attention vectors identifying patterns associated with relationships among entries across multiple different ones of the anomaly severity sequences generated by multiple different loggers.

9. The method of claim 1 comprising performing self-supervised training to automatically label the sequence of log tokens with the sequence of anomaly severity levels.

10. A system for detecting abnormal behavior in industrial machines, the system comprising:
one or more memories configured to store a sequence of log file messages, recorded at one or more initial times by one or more loggers, of operations of one or more components in an industrial machine; and
one or more processors configured to perform the method of any one of claims 1-9.

11. A non-transitory computer-readable storage medium comprising instructions that when executed cause one or more processors to perform the method of any one of claims 1-9.
